# EUROPEAN PATENT APPLICATION

(11) **EP 4 848 560 A1**
(43) Date of publication of application: **02.12.2026**
(21) Application number: 24920380.3
(22) Date of filing: 22.01.2024
(51) Int. Cl.: H02M 7/48

(54) **ELECTRIC POWER CONVERSION DEVICE AND AIR CONDITIONER**

(71) Applicant: Bosch Home Comfort Japan, Inc., Tokyo 105-0022 (JP)
(72) Inventor: LI, Dongsheng, Tokyo 100-8280 (JP)
(74) Representative: MERH-IP Matias Erny Reichl Hoffmann Patentanwälte PartG mbB
(86) International application number: PCT/JP2024/001609
(87) International publication number: WO 2025/158488

(57) **Abstract**

Provided is an electric power conversion device or the like that is configured to reduce electric power supply harmonic currents. An electric power conversion device (100) comprises a rectifier circuit (10) that converts an AC voltage applied from an AC electric power supply (E1) to a DC voltage, a smoothing capacitor (30) that smooths the DC voltage on the output side of the rectifier circuit (10), an inverter circuit (40) that converts the DC voltage of the smoothing capacitor (30) to an AC voltage and drives a motor (M1) using the AC voltage, a power supply voltage detection unit (50) that detects the power supply voltage of the AC power supply (E1), and a control unit (80) that controls the inverter circuit (40), the control unit (80) changing a compensation amount for a command voltage or a command electric current when the inverter circuit (40) is driven, so as to reduce power supply harmonic currents, on the basis of the power supply voltage.

## Description

### TECHNICAL FIELD

The present disclosure relates to an electric power conversion device and so on.

### BACKGROUND ART

Regarding electric power conversion devices that convert AC power to DC power and further converts this DC power to predetermined AC power, for example, the technique described in Patent Literature 1 is known. Specifically, Patent Literature 1 describes the technique of controlling an inverter section based on a cross terminal voltage of an inductance element so that a transfer characteristic of an input/output voltage of the inverter section will become a characteristic of attenuation attributed to a series connection of a phase lead element and a second-order lag element.

### CITATION LIST

### Patent Literature

Patent Literature 1: JP4067021

### SUMMARY OF INVENTION

### Technical Problem

The technique described in Patent Literature 1 controls the inverter section to reduce the harmonic components of the LC resonance, but still has room for improvement in terms of reducing power supply harmonic currents.

Therefore, the present disclosure has an object to provide an electric power conversion device configured to reduce power supply harmonic currents, and so on.

### Solution to Problem

In order to achieve the above object, an electric power conversion device according to the present disclosure includes: a rectifier circuit configured to convert an AC voltage applied from an AC power supply into a DC voltage; a smoothing capacitor configured to smooth the DC voltage on an output side of the rectifier circuit; an inverter circuit configured to convert the DC voltage of the smoothing capacitor into an AC voltage and cause the motor to be driven with the AC voltage; a power supply voltage detection unit configured to detect a power supply voltage of the AC power supply; and a control unit configured to control the inverter circuit. The control unit changes a compensation amount for a command voltage or command current for driving the inverter circuit based on the power supply voltage to such a predetermined amount as to reduce power supply harmonic currents.

### Advantageous Effects of Invention

According to the present disclosure, it is possible to provide an electric power conversion device configured to reduce power supply harmonic currents and so on.

### BRIEF DESCRIPTION OF DRAWINGS

FIG. 1 is a configuration diagram of an electric power conversion device according to a first embodiment.
FIG. 2 is a functional block diagram of a control unit in the electric power conversion device according to the first embodiment.
FIG. 3 is a functional block diagram of a power supply current oscillation suppressor in the electric power conversion device according to the first embodiment.
FIG. 4 includes waveform diagrams showing a relationship among AC voltages, line voltages, phase voltages, and a power supply phase in the electric power conversion device according to the first embodiment.
FIG. 5 includes waveform diagrams showing changes in phase voltages, a commutation section flag, and an oscillation suppression compensation amount in the electric power conversion device according to the first embodiment.
FIG. 6 includes waveform diagrams showing changes in a power supply phase and a distortion suppression compensation amount in the electric power conversion device according to the first embodiment.
FIG. 7 is a functional block diagram of a command voltage adjuster in the electric power conversion device according to the first embodiment.
FIG. 8A is a waveform diagram of a R-phase power supply current in the electric power conversion device according to the first embodiment.
FIG. 8B is another waveform diagram of the R-phase power supply current in the electric power conversion device according to the first embodiment.
FIG. 9 is a diagram showing analysis results of power supply harmonic currents in the electric power conversion device according to the first embodiment.
FIG. 10 is a functional block diagram of a power supply fault detector in the electric power conversion device according to the first embodiment.
FIG. 11 is a functional block diagram of a control unit in an electric power conversion device according to a second embodiment.
FIG. 12 is a functional block diagram of a command voltage adjuster in the electric power conversion device according to the second embodiment.
FIG. 13 is a functional block diagram of a control unit in an electric power conversion device according to a third embodiment.
FIG. 14 is a functional block diagram of a current adjuster in the electric power conversion device according to the third embodiment.
FIG. 15 is a configuration diagram of an air conditioner according to a fourth embodiment.
FIG. 16 includes waveform diagrams showing changes in phase voltages, a rectifier circuit output voltage, and an R-phase power supply current in a comparative example in a case where current oscillation suppression control is not performed.

### DESCRIPTION OF EMBODIMENTS

### <<First Embodiment>>

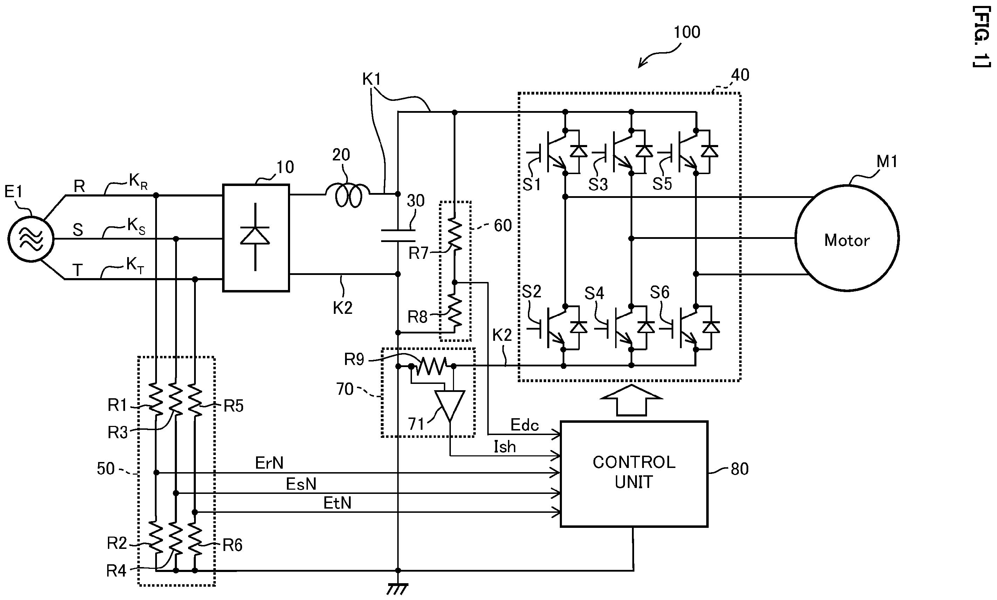

FIG. 1 is a configuration diagram of an electric power conversion device 100 according to a first embodiment.

The electric power conversion device 100 shown in FIG. 1 is a device configured to convert AC power supplied from an AC power supply E1 into DC power, convert this DC power to predetermined AC power, and output the predetermined AC power to a motor M1. The motor M1 may be, for example, a permanent magnet synchronous motor or any other type of motor. As shown in FIG. 1, the electric power conversion device 100 includes a rectifier circuit 10, a DC reactor 20, a smoothing capacitor 30, and an inverter circuit 40. In addition to the above constituents, the electric power conversion device 100 also includes a power supply voltage detection unit 50, a DC voltage detection unit 60, a bus current detection unit 70, and a control unit 80.

The rectifier circuit 10 is a circuit configured to convert AC voltages applied from the three-phase AC power supply E1 into a DC voltage (pulsating DC voltage). As such a rectifier circuit 10, for example, a diode bridge circuit for full-wave rectification is used, but the rectifier circuit is not limited to this. Instead, a switching-type rectifier circuit may be also used as the rectifier circuit 10. As shown in FIG. 1, an output side of the rectifier circuit 10 is connected to the inverter circuit 40 via a positive DC line K1 and also via a negative DC line K2.

The DC reactor 20 is an element configured to smooth the pulsating DC voltage applied from the rectifier circuit 10 and suppressing an inrush current during startup. As shown in FIG. 1, the DC reactor 20 is provided on the positive DC line K1. More specifically, the DC reactor 20 is provided on the positive DC line K1 between the rectifier circuit 10 and a connection point of the DC line K1 with the smoothing capacitor 30.

The smoothing capacitor 30 is an element configured to smooth the DC voltage on the output side of the rectifier circuit 10, and is connected to the DC lines K1 and K2 on the output side of the rectifier circuit 10. Specifically, the smoothing capacitor 30 has one terminal (one lead wire) connected to the positive DC line K1 and the other terminal (the other lead wire) connected to the negative DC line K2. For example, a film capacitor is used as such a smoothing capacitor 30.

Generally, the film capacitor is smaller in size (volume) than a large-capacity electrolytic capacitor. Therefore, use of a film capacitor as the smoothing capacitor 30 makes it possible to downsize the circuit board (not shown) for the electric power conversion device 100. In addition, the film capacitor uses an insulating plastic film as a dielectric, and does not particularly need to use an electrolyte as in the electrolytic capacitor. Therefore, even when used in a high-temperature environment in the summer season, like an outdoor unit of an air conditioner, the film capacitor has almost no risk of a malfunction.

However, in a case where a small-capacity film capacitor is used with the cost per unit capacitance taken into account, power supply harmonic currents (harmonic currents on the AC power supply E1 side) are likely to occur. Also, a resonant frequency between the film capacitor and the DC reactor 20 is often 10 or more times higher than a power supply frequency (50 [Hz] or 60 [Hz]). As a result, high-order power supply harmonic currents such as 17th- and 19th-order harmonics tend to be large. To address this, in the first embodiment, the control unit 80 controls the inverter circuit 40 in a predetermined manner to suppress power supply harmonic currents. Here, the type of smoothing capacitor 30 is not limited to a film capacitor, and any other type of capacitor such as an electrolytic capacitor may also be used.

The inverter circuit 40 is a power converter configured to convert the DC voltage of the smoothing capacitor 30 into predetermined AC voltages and causes the motor M1 to be driven with these AC voltages. As shown in FIG. 1, the inverter circuit 40 has a configuration in which a first leg including a series connection of switching elements S1 and S2, a second leg including a series connection of switching elements S3 and S4, and a third leg including a series connection of switching elements S5 and S6 are connected in parallel to the smoothing capacitor 30. In the example in FIG. 1, insulated gate bipolar transistors (IGBTs) are used as the switching elements S1 to S6, but the switching elements S1 to S6 are not limited to this type. In other words, metal oxide semiconductor field effect transistors (MOSFETs) or bipolar transistors may be used as the switching elements S1 to S6.

In the first leg described above, the connection point between the pair of switching elements S1 and S2 is connected to a winding of the motor M1 via wiring. The same applies to the remaining second and third legs. In addition, in the inverter circuit 40, in order to prevent the switching elements S1 to S6 from being destroyed by commutation, a freewheeling diode (its reference sign is not shown in FIG. 1) is connected in antiparallel to each of the switching elements S1 to S6. In the case where the switching elements S1 to S6 have parasitic diodes, these parasitic diodes function as freewheeling diodes, so that freewheeling diodes do not particularly need to be provided additionally.

The power supply voltage detection unit 50 detects power supply voltages of the AC power supply E1. In the example in FIG. 1, the power supply voltage detection unit 50 is connected so as to detect three-phase (R-phase, S-phase, T-phase) voltages of the AC power supply E1. The power supply voltage detection unit 50 includes resistive elements R1 to R6. For example, a series connection of the resistive elements R1 and R2 has one terminal (on a resistive element R1 side) connected to an R-phase wiring K_{R}, and the other terminal (on a resistive element R2 side) connected to the ground terminal of the control unit 80. The connection point between the resistive elements R1 and R2 is connected to an input terminal of the control unit 80 via wiring. The voltage of the resistive element R2 out of the pair of resistive elements R1 and R2 is applied to the input terminal of the control unit 80 as an AC voltage signal ErN indicating the R-phase voltage.

The control unit 80 calculates the voltage between the R-phase terminal of the AC power supply E1 and the ground terminal based on the voltage of the resistive element R2 and the voltage division ratio of the resistive elements R1 and R2. The same applies to a series connection of the resistive elements R3 and R4 used to detect the S-phase voltage, and a series connection of the resistive elements R5 and R6 used to detect the T-phase voltage. In this way, the three-phase AC voltage signals ErN, EsN, and EtN are inputted to the input terminals of the control unit 80, respectively.

The DC voltage detection unit 60 detects the DC voltage across the smoothing capacitor 30 and includes resistive elements R7 and R8. In the example in FIG. 1, one terminal of the series connection of the resistive elements R7 and R8 (on a resistive element R7 side) is connected to the positive DC line K1. The other terminal of the series connection of the resistive elements R7 and R8 (on a resistive element R8 side) is connected to the negative DC line K2 and also to the ground terminal of the control unit 80. The connection point between the resistive elements R7 and R8 is connected to an input terminal of the control unit 80 via wiring. The voltage of the resistive element R8 out of the pair of resistive elements R7 and R8 is applied to the input terminal of the control unit 80 as a DC voltage signal Edc. The control unit 80 calculates a moment-by-moment DC voltage of the smoothing capacitor 30 based on the voltage of the resistive element R8 and the voltage division ratio of the resistive elements R7 and R8.

The bus current detection unit 70 detects a bus current flowing through the DC line K2. As shown in FIG. 1, the bus current detection unit 70 includes a resistive element R9 provided on the DC line K2 and an amplifier 71 that amplifies the voltage across the resistive element R2. The amplifier 71 inputs a bus current signal Ish to an input terminal of the control unit 80. The control unit 80 calculates the bus current based on the bus current signal Ish. For example, the control unit 80 samples the bus current twice per cycle in PWM cycles.

The control unit 80 has a function of controlling the inverter circuit 40 in a predetermined manner in addition to the aforementioned functions. Specifically, the control unit 80 converts the moment-by-moment detection values (analog signals) from the power supply voltage detection unit 50, the DC voltage detection unit 60, and the bus current detection unit 70 into digital signals, and controls the inverter circuit 40 in the predetermined manner based on these digital signals. A sample-and-hold circuit (not shown) or an A/D converter (not shown) may be used as appropriate to convert the analog signals into the digital signals. The control unit 80 then outputs predetermined pulse width modulation (PWM) signals based on PWM control to the switching elements S1 to S6. For example, a microcomputer or a digital signal processor (DSP) may be used as such a control unit 80.

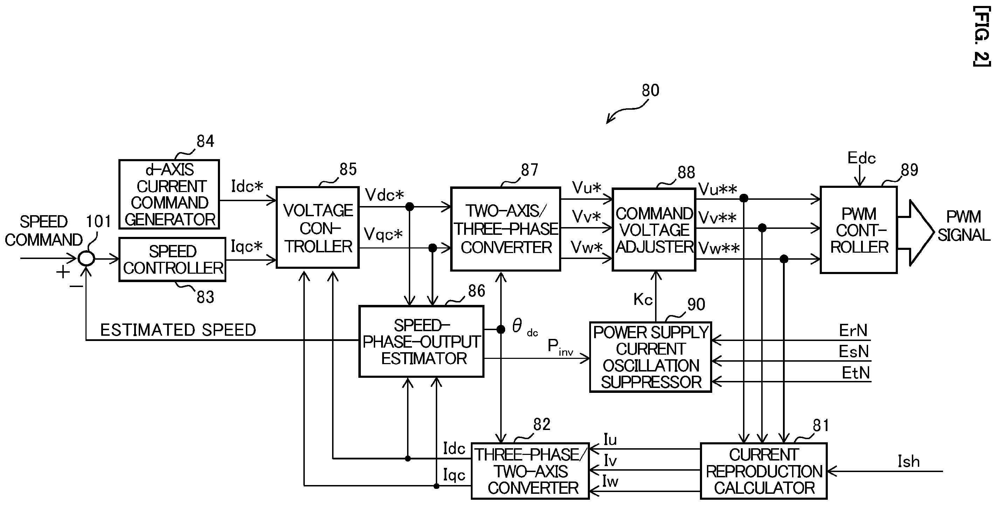

FIG. 2 is a functional block diagram of the control unit 80 of the electric power conversion device.

As shown in FIG. 2, the control unit 80 includes a current reproduction calculator 81, a three-phase/two-axis converter 82, a speed controller 83, a d-axis command current generator 84, and a voltage controller 85. In addition to the above constituents, the control unit 80 also includes a speed-phase-output estimator 86, a two-axis/three-phase converter 87, a command voltage adjuster 88, a PWM controller 89, and a power supply current oscillation suppressor 90.

The current reproduction calculator 81 reproduces output currents (Iu, Iv, Iw) of the inverter circuit 40 based on the bus current signal Ish inputted from the bus current detection unit 70 (see FIG. 1) and three-phase command voltages (Vu**, Vv**, Vw**).

The three-phase/two-axis converter 82 calculates a dc-axis current Idc and a qc-axis current Iqc based on the three-phase output currents (Iu, Iv, Iw) reproduced by the current reproduction calculator 81 and a control axis phase θ_{dc} of a rotor of the motor M1 (see FIG. 1) estimated by the speed-phase-output estimator 86. Here, an actual direction of a magnet magnetic flux in the motor M1 (see FIG. 1) is defined as a d-axis, and an axis perpendicular to this d-axis is defined as a q-axis. Then, the d-axis estimated in the control unit 80 is defined as a dc-axis (the same applies to a qc-axis). In other words, the dc-axis current Idc and the qc-axis current Iqc are motor currents of the dc-axis and qc-axis estimated in the control unit 80.

The speed controller 83 generates a qc-axis command current Iqc* based on a speed command inputted from outside. The d-axis command current generator 84 generates a dc-axis command current Idc*.

The voltage controller 85 calculates a dc-axis command voltage Vdc* and a qc-axis command voltage Vqc* based on the dc-axis command current Idc* and qc-axis command current Iqc* and additionally based on the dc-axis current Idc, the qc-axis current Iqc, the speed command, a motor constant, and so on.

The speed-phase-output estimator 86 estimates a phase difference between the dc-qc axes and the actual d-q axes of the motor M1 (see FIG. 1) based on the dc-axis command voltage Vdc*, the qc-axis command voltage Vqc*, the dc-axis current Idc, the qc-axis current Iqc, the motor constant, and so on. The speed-phase-output estimator 86 also calculates an estimated speed and a control axis phase θ_{dc} of the motor M1 (see FIG. 1) based on the aforementioned phase difference and so on.

Then, a subtractor 101 performs a process of subtracting the estimated speed from the given speed command, and inputs the value obtained by the subtraction to the speed controller 83. Since these processes are well known, their detailed description is omitted here. In addition, the speed-phase-output estimator 86 calculates an output Pᵢₙᵥ of the inverter circuit 40 based on the following equation (1).${P}_{inv} = Vdc * \times Idc + Vqc * \times Iqc$ (1)

The value of the output Pᵢₙᵥ thus calculated by the speed-phase-output estimator 86 is outputted to the power supply current oscillation suppressor 90. The two-axis/three-phase converter 87 calculates the three-phase command voltages (Vu*, Vv*, Vw*) based on the dc-axis command voltage Vdc* and the qc-axis command voltage Vqc* and also based on the control axis phase θ_{dc} calculated by the speed-phase-output estimator 86.

The command voltage adjuster 88 adjusts the three-phase command voltages (Vu*, Vv*, Vw*) based on a compensation amount Kc (also called an adjustment gain) calculated by the power supply current oscillation suppressor 90, and generates the adjusted three-phase command voltages (Vu**, Vv**, Vw**). The calculation of the compensation amount Kc and the adjustment of the three-phase command voltages (Vu*, Vv*, Vw*) will be described later.

The PWM controller 89 calculates a modulation rate for performing the PWM control based on the DC voltage signal Edc inputted from the DC voltage detection unit 60 (see FIG. 1) and also based on the three-phase command voltages (Vu**, Vv**, Vw**), and generates a PWM signal. Based on the PWM signal thus generated, on/off of each of the switching elements S1 to S6 (see FIG. 1) of the inverter circuit 40 (see FIG. 1) is controlled.

The power supply current oscillation suppressor 90 calculates the compensation amount Kc for suppressing oscillations in the power supply currents based on the output Pᵢₙᵥ calculated by the speed-phase-output estimator 86 and also based on the AC voltage signals (ErN, EsN, EtN) inputted from the power supply voltage detection unit 50 (see FIG. 1). The compensation amount Kc calculated by the power supply current oscillation suppressor 90 is outputted to the command voltage adjuster 88. The compensation amount Kc is a compensation amount for the command voltages (or command currents) used to drive the inverter circuit 40, and its calculation method will be described later.

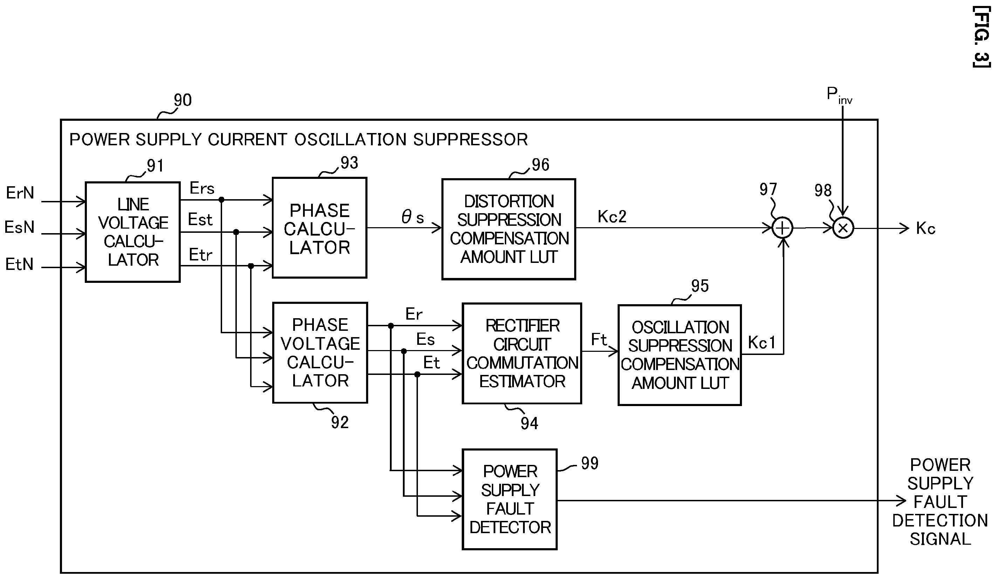

FIG. 3 is a functional block diagram of the power supply current oscillation suppressor 90.

As shown in FIG. 3, the power supply current oscillation suppressor 90 includes a line voltage calculator 91, a phase voltage calculator 92, a phase calculator 93, and a rectifier circuit commutation estimator 94. In addition to the above-mentioned constituents, the power supply current oscillation suppressor 90 also includes an oscillation suppression compensation amount lookup table (LUT) 95, a distortion suppression compensation amount lookup table (LUT) 96, an adder 97, a multiplier 98, and a power supply fault detector 99.

The line voltage calculator 91 calculates line voltages (Ers, Est, Etr) of the AC power supply E1 (see FIG. 1) based on the following equations (2) to (4) using the AC voltage signals (ErN, EsN, EtN).$Ers = ErN - EsN$ (2) $Est = EsN - EtN$ (3) $Etr = EtN - ErN$ (4)

The phase voltage calculator 92 calculates phase voltages (Er, Es, Et) of the respective phases of the AC power supply E1 (see FIG. 1) based on the following equations (5) to (7) using the line voltages (Ers, Est, Etr).$Er = \left(Ers-Etr\right) / 3$ (5) $Es = \left(Est-Ers\right) / 3$ (6) $Et = \left(Etr-Est\right) / 3$ (7)

The phase calculator 93 calculates a power supply phase θs based on the following equation (8) using the line voltages (Ers, Est, Etr). Here, the power supply phase θs refers to a phase of the power supply voltages of the AC power supply E1.$θs = arctan \left\{\left(-√3Ers\right)/\left(2Est+Ers\right)\right\} - 30 °$ (8)

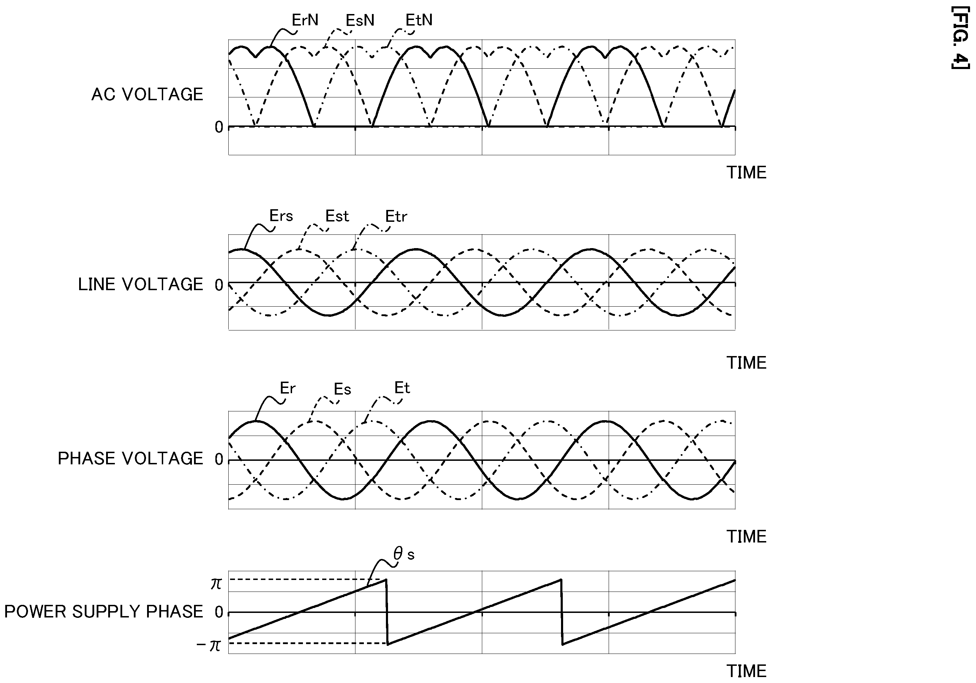

FIG. 4 includes waveform diagrams showing a relationship among AC voltages, line voltages, phase voltages, and a power supply phase.

In FIG. 4, the horizontal axis of each waveform diagram represents a time. The vertical axes of the waveform diagrams, from top to bottom on the page of FIG. 4, represent the AC voltages (i.e., the AC voltage signals (ErN, EsN, EtN)), the line voltages (Ers, Est, Etr), the phase voltages of the three phases (Er, Es, Et), and the power supply phase θs of the AC voltages. The moment-by-moment line voltages (Ers, Est, Etr) calculated from the AC voltage signals (ErN, EsN, EtN) based on the equations (2) to (4) described above result in sinusoidal waveforms as shown in FIG. 4. Similarly, the moment-by-moment phase voltages (Er, Es, Et) calculated based on the equations (5) to (7) described above result in sinusoidal waveforms as shown in FIG. 4. The power supply phase θs repeats changes over time by linearly rising from -π [rad] to +π [rad], then returning to -π [rad], and linearly rising again.

Note that, at the timing when a level relationship between any two of the three phase voltages (Er, Es, Et) is changed, the current path of the rectifier circuit 10 (see FIG. 1) switches, causing the output voltage of the rectifier circuit 10 to change sharply. Such sharp changes in the output voltage of the rectifier circuit 10 make LC oscillations easy to occur in the power supply currents. The aforementioned "LC oscillation" means a resonance between the DC reactor 20 (see FIG. 1) and the smoothing capacitor 30 (see FIG. 1). In order to suppress the power supply harmonic currents associated with such LC oscillations, in the first embodiment, the control unit 80 (see FIG. 1) performs predetermined current oscillation suppression control using the power supply current oscillation suppressor 90 (see FIG. 3). The current oscillation suppression control will be described later.

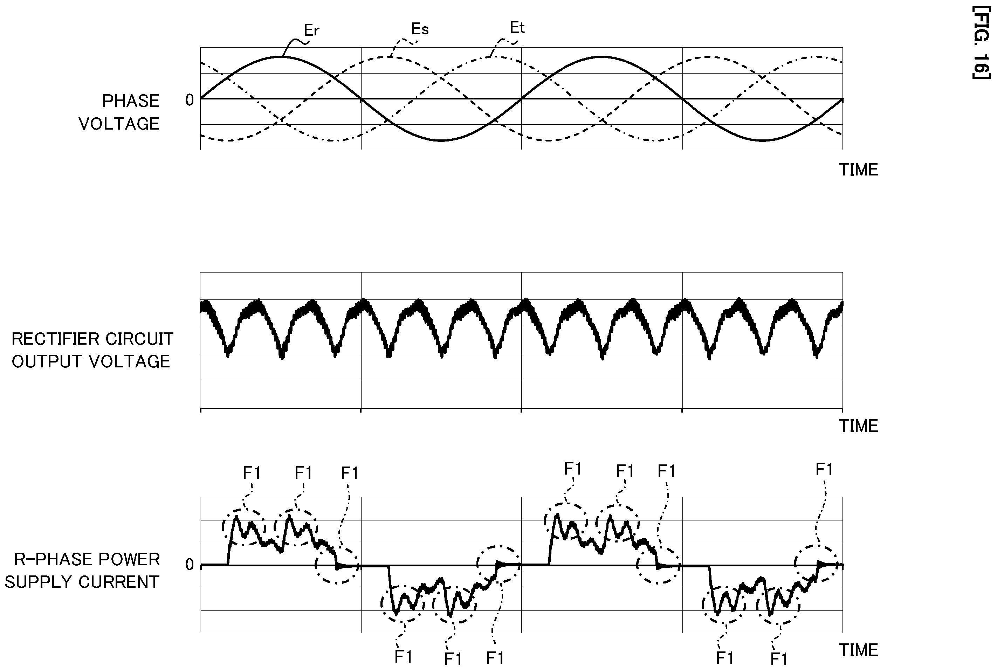

FIG. 16 includes waveform diagrams showing changes in phase voltages, a rectifier circuit output voltage, and an R-phase power supply current in a comparative example in a case where the current oscillation suppression control is not performed.

In FIG. 16, the horizontal axis of each waveform diagram represents a time. The vertical axes of the waveform diagrams, from top to bottom on the page of FIG. 16, represent the phase voltages (Er, Es, Et), the output voltage of the rectifier circuit 10 (see FIG. 1), and the R-phase power supply current.

At the timing when the level relationship between the phase voltages is changed, the current path of the rectifier circuit 10 (see FIG. 1) switches as described above, and accordingly the output voltage of the rectifier circuit 10 is varied sharply. As a result, the R-phase power supply current fluctuates finely in each of points indicated by reference symbols F1 in FIG. 16, generating power supply harmonic currents. Here, a sinusoidal power supply harmonic current changing at a frequency of n times (where n is an integer) higher than that of a sinusoidal fundamental wave changing at a power supply frequency (50 [Hz] or 60 [Hz]) is called an "n-th order power supply harmonic current".

Returning to FIG. 3, the description will be continued.

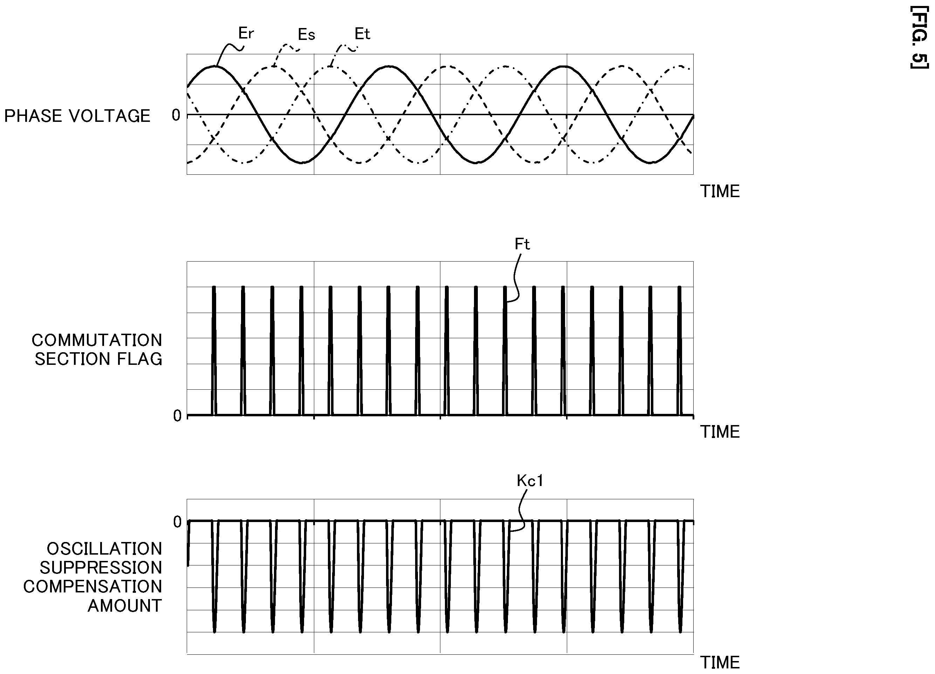

The rectifier circuit commutation estimator 94 estimates a commutation timing based on the level relationship between the phase voltages, using the calculation result of the phase voltage calculator 92. Here, the "commutation timing" refers to a timing when the current path in the rectifier circuit 10 (see FIG. 1) switches. In other words, the timing when the level relationship between the phase voltages is changed is the "commutation timing". The rectifier circuit commutation estimator 94 determines, as a commutation section, a section in which the voltage difference between any two of the three phase voltages is less than or equal to a predetermined value (for example, 1 [V]). Then, at the commutation section, the rectifier circuit commutation estimator 94 outputs a predetermined commutation section flag Ft (see also FIG. 5) to the oscillation suppression compensation amount LUT 95.

The oscillation suppression compensation amount LUT 95 is a lookup table for generating an oscillation suppression compensation amount Kc1 when the commutation section flag Ft is inputted from the rectifier circuit commutation estimator 94. Here, a "lookup table" is a table for assigning a predetermined output value that changes moment by moment, according to an input value, and is set in advance based on simulation results and measured data.

FIG. 5 includes waveform diagrams showing changes in phase voltages, a commutation section flag, and an oscillation suppression compensation amount.

In FIG. 5, the horizontal axis of each waveform diagram represents a time. The vertical axes of the waveform diagrams, from top to bottom on the page of FIG. 5, represent the phase voltages (Er, Es, Et), the commutation section flag Ft generated by the rectifier circuit commutation estimator 94 (see FIG. 3), and the oscillation suppression compensation amount Kc1 generated by the oscillation suppression compensation amount LUT 95 (see FIG. 3).

In the example in FIG. 5, when the commutation section flag Ft is inputted, the oscillation suppression compensation amount Kc1 is generated such that its value drops steeply from zero to a predetermined value and then rises steeply. In this way, the control unit 80 (see FIG. 1) generates the predetermined oscillation suppression compensation amount Kc1 in each of the commutation sections (sections) where the level relationship between the instantaneous values of the phase voltages of the respective phases of the AC power supply E1 (see FIG. 1) is changed. This oscillation suppression compensation amount Kc1 is used to suppress higher-order power supply harmonic currents such as the 17th-, 19th-, and 23rd-order harmonics.

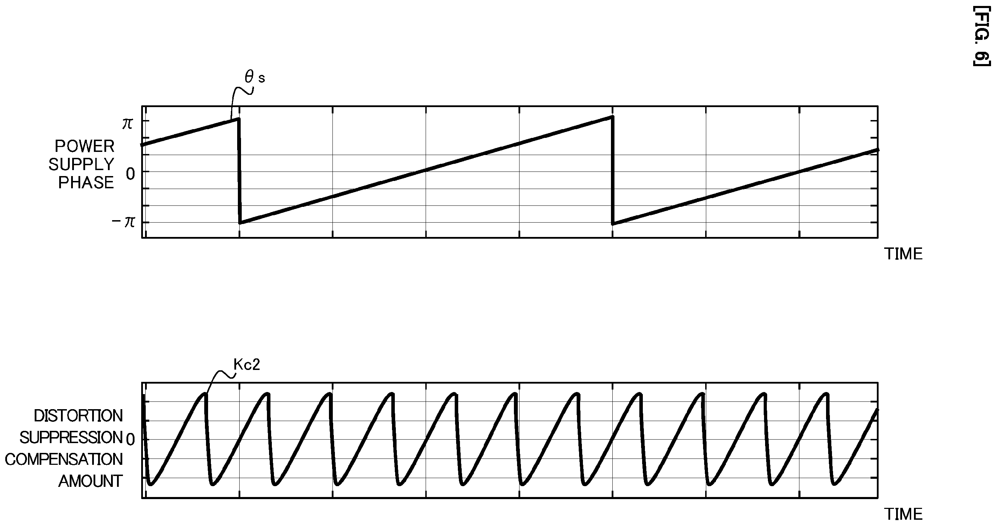

The distortion suppression compensation amount LUT 96 shown in FIG. 3 is a lookup table for generating a distortion suppression compensation amount Kc2 based on the power supply phase θs, which is the calculation result of the phase calculator 93. This distortion suppression compensation amount Kc2 will be explained using FIG. 6.

FIG. 6 includes waveform diagrams showing changes in the power supply phase and the distortion suppression compensation amount.

In FIG. 6, the horizontal axis of each waveform diagram represents a time. The vertical axes of the waveform diagrams, from top to bottom on the page of FIG. 6, represent the power supply phase θs and the distortion suppression compensation amount Kc2 generated according to the distortion suppression compensation amount LUT 96 (see FIG. 3). In the example in FIG. 6, the distortion suppression compensation amount Kc2 is set to change in a sawtooth wave pattern over time. In addition, the distortion suppression compensation amount Kc2 is set in advance to become zero at the timing when the power supply phase θs switches from π [rad] to -π [rad].

The distortion suppression compensation amount Kc2 repeats changes over time by linearly rising from zero to a predetermined value, then dropping steeply, and then linearly rising again. In this way, the control unit 80 (see FIG. 1) generates the distortion suppression compensation amount Kc2 that changes in the sawtooth wave pattern based on the phase of the power supply voltages of the AC power supply E1 (i.e., the power supply phase θs). In the example in FIG. 6, the rise and the drop of the distortion suppression compensation amount Kc2 are repeated six times in total while the power supply phase changes from -π [rad] to π [rad]. Such a distortion suppression compensation amount Kc2 is used to suppress low-order power supply harmonic currents, such as fifth-order harmonics.

Here, control for suppressing the power supply harmonic currents based on the oscillation suppression compensation amount Kc1 and the distortion suppression compensation amount Kc2 is called "current oscillation suppression control".

The adder 97 shown in FIG. 3 is a calculator for adding up the oscillation suppression compensation amount Kc1 and the distortion suppression compensation amount Kc2. The multiplier 98 calculates the compensation amount Kc by multiplying the calculation result of the adder 97 by the value of the output Pᵢₙᵥ of the inverter circuit 40 (see FIG. 1). In other words, the adder 97 and the multiplier 98 perform calculation in accordance with the following equation (9). Here, the value of the output Pᵢₙᵥ contained in the equation (9) is calculated based on the equation (1) presented above.$Kc = \left(Kc1+Kc2\right) \times {P}_{inv}$ (9)

In sum, the control unit 80 (see FIG. 1) generates the oscillation suppression compensation amount Kc1 and the distortion suppression compensation amount Kc2, and calculates the compensation amount Kc for the command voltage Vu** based on the sum of the oscillation suppression compensation amount Kc1 and the distortion suppression compensation amount Kc2. In this way, in the first embodiment, the power supply current oscillation suppressor 90 calculates the compensation amount Kc moment by moment based on feedforward control. As a result, a delay time associated with the calculation processing is shortened compared to a case where feedback control is performed, which makes it possible to stabilize the control of calculating the compensation amount Kc and reflecting the compensation amount Kc to the three-phase command voltages (Vu**, Vv**, Vw**).

The equation (9) teaches that the smaller the output Pᵢₙᵥ (output power) of the inverter circuit 40, the smaller the compensation amount Kc. In other words, the control unit 80 (see FIG. 1) makes the compensation amount Kc for the command voltages smaller as the output Pᵢₙᵥ (output power) of the inverter circuit 40 becomes smaller. This is because ripple components of the power supply currents are small when the output Pᵢₙᵥ of the inverter circuit 40 is small. In this way, the power supply current oscillation suppressor 90 adjusts the compensation amount Kc moment by moment according to the output Pᵢₙᵥ of the inverter circuit 40.

The timing and order of reading data from the oscillation suppression compensation amount LUT 95 and the distortion suppression compensation amount LUT 96 are set in advance so as to compensate for a delay time until the AC voltage signals (ErN, EsN, EtN) are reflected in the PWM control after they are inputted to the control unit 80.

The power supply fault detector 99 shown in FIG. 3 detects a fault in the AC power supply E1 (see FIG. 1) based on the phase voltages (Er, Es, Et). Details of the power supply fault detector 99 will be described later.

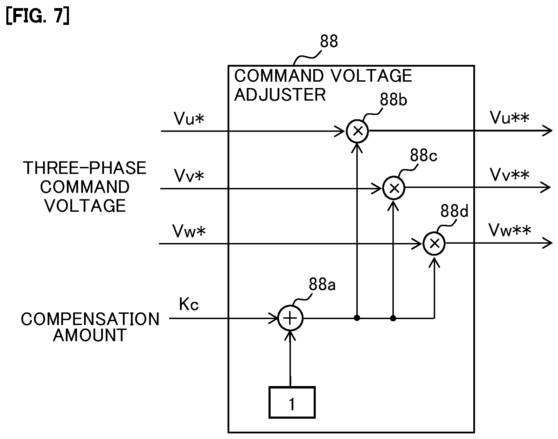

As described above, the command voltage adjuster 88 shown in FIG. 2 adjusts the three-phase command voltages (Vu*, Vv*, Vw*) based on the compensation amount Kc, and generates the adjusted three-phase command voltages (Vu**, Vv**, Vw**). This adjustment of the three-phase command voltages will be explained using FIG. 7.

FIG. 7 is a functional block diagram of the command voltage adjuster 88.

As shown in FIG. 7, the command voltage adjuster 88 includes an adder 88a and multipliers 88b, 88c, and 88d. The adder 88a adds a value "1" to the compensation amount Kc calculated by the power supply current oscillation suppressor 90 (see FIG. 3). The multiplier 88b multiplies the U-phase command voltage Vu* by the calculation result of the adder 88a, thereby generating a new command voltage Vu**.

In the same manner, the multiplier 88c calculates the V-phase command voltage Vv**, and the other multiplier 88d calculates the W-phase command voltage Vw**. Then, the PWM signal is generated based on the adjusted three-phase command voltages (Vu**, Vv**, Vw**). The control unit 80 (see FIG. 1) then changes the compensation amount Kc for the three-phase command voltages (command voltages) for driving the inverter circuit 40, based on the power supply voltages to such a predetermined amount as to reduce the power supply harmonic currents. A specific amount to which the compensation amount Kc is changed so as to reduce the power supply harmonic currents is set in advance as the oscillation suppression compensation amount LUT 95 (see FIG. 3) and the distortion suppression compensation amount LUT 96 (see FIG. 3).

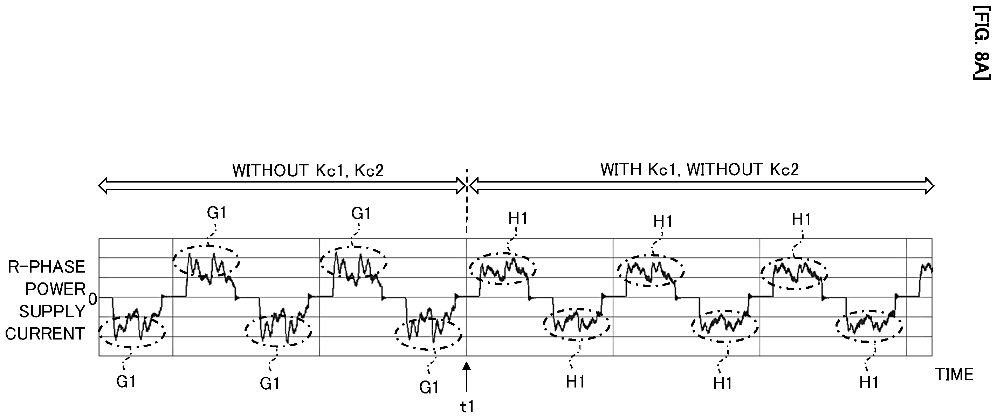

FIG. 8A is a waveform diagram of an R-phase power supply current.

In FIG. 8A, the horizontal axis represents a time, and the vertical axis represents an R-phase power supply current. In the example in FIG. 8A, until time t1, the oscillation suppression compensation amount Kc1 and the distortion suppression compensation amount Kc2 are not reflected in the PWM control. After time t1, the oscillation suppression compensation amount Kc1 is reflected in the PWM control, while the distortion suppression compensation amount Kc2 is not reflected in the PWM control. In other words, after time t1, the current oscillation suppression control is performed based only on the oscillation suppression compensation amount Kc1.

As indicated by reference symbols G1 in FIG. 8A, the power supply current periodically exhibits fine oscillations until time t1. Then, as indicated by reference symbols H1, the fine oscillations of the power supply current are suppressed after time t1. This is because the higher-order power supply harmonic currents such as the 17th-, 19th-, and 23rd-order harmonics are suppressed with the three-phase command voltages (Vu**, Vv**, Vw**) generated based on the oscillation suppression compensation amount Kc1.

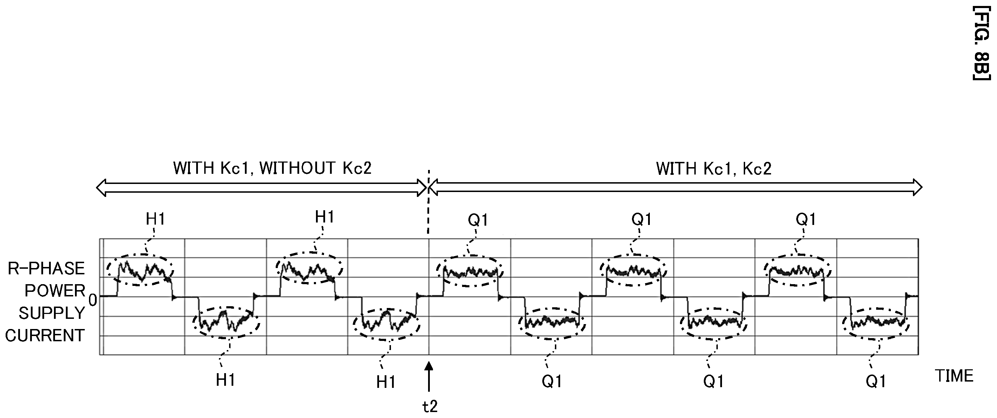

FIG. 8B is another waveform diagram of the R-phase power supply current.

In FIG. 8B, the vertical and horizontal axes are the same as in FIG. 8A. In the example in FIG. 8B, until time t2, the oscillation suppression compensation amount Kc1 is reflected in the PWM control, while the distortion suppression compensation amount Kc2 is not reflected in the PWM control. After time t2, both the oscillation suppression compensation amount Kc1 and the distortion suppression compensation amount Kc2 are reflected in the PWM control. In other words, after time t2, the current oscillation suppression control is performed based on the oscillation suppression compensation amount Kc1 and the distortion suppression compensation amount Kc2.

Here, the waveforms in the portions marked with reference signs H1 in the period until time t2 in FIG. 8B are the same as the waveforms in the portions marked with reference signs H1 in the period after time t1 in FIG. 8A, because they are in common in that only the oscillation suppression compensation amount Kc1 is reflected in the PWM control. As indicated by reference signs Q1 in FIG. 8B, the fine oscillations of the power supply current are further suppressed after time t2. This is because the low-order power supply harmonic currents such as the fifth-order harmonic are suppressed with the three-phase command voltages (Vu**, Vv**, Vw**) generated based on the distortion suppression compensation amount Kc2.

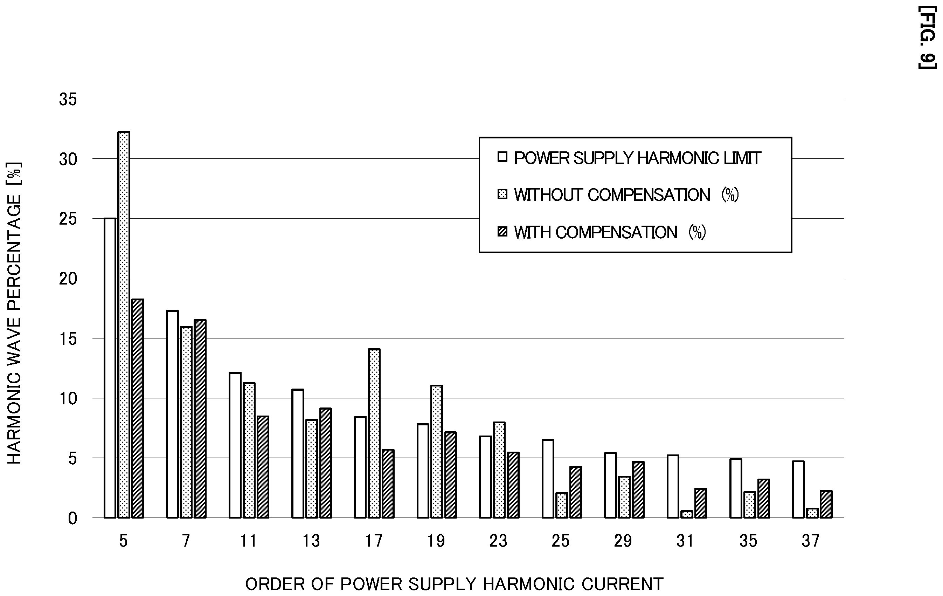

FIG. 9 is a diagram showing an example of analysis results of power supply harmonic currents.

In FIG. 9, the horizontal axis represents the order of power supply harmonic current, and the vertical axis represents a harmonic wave percentage. Then, "power supply harmonic limit" indicated in the legend specifically refers to a power supply harmonic limit governed by IEC 61000-3-12. In addition, "without compensation" indicates a comparative example in a case where neither the oscillation suppression compensation amount Kc1 nor the distortion suppression compensation amount Kc2 is reflected in the PWM control. In contrast, "with compensation" indicates a case where both the oscillation suppression compensation amount Kc1 and the distortion suppression compensation amount Kc2 are reflected in the PWM control (in short, the case of the first embodiment).

In the example in FIG. 9, in the case "without compensation", not only the fifth-order power supply harmonic current but also the higher-order power supply harmonic currents such as the 17th-, 19th-, and 23rd-order harmonics exceed the values specified by the power supply harmonic limits. In contrast, in the case "with compensation" where the current oscillation suppression control is performed (i.e., the first embodiment), it is confirmed that the power supply harmonic currents of all the orders are lower than the values specified by the power supply harmonic limits.

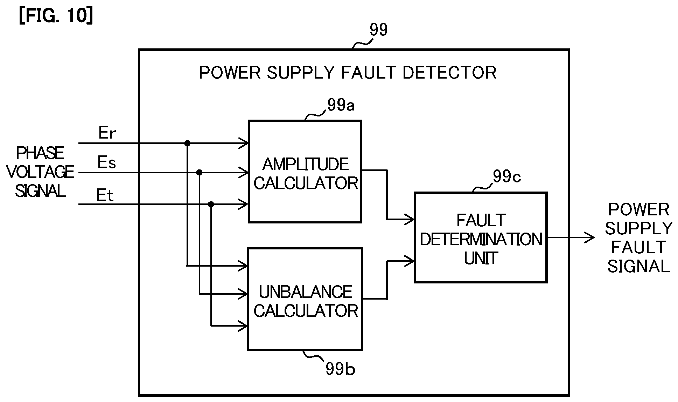

FIG. 10 is a functional block diagram of the power supply fault detector 99.

As shown in FIG. 10, the power supply fault detector 99 includes an amplitude calculator 99a, an unbalance calculator 99b, and a fault determination unit 99c. The amplitude calculator 99a determines whether or not there is an instantaneous power outage or a sudden rise in the power supply voltages based on a change range and a change speed in the amplitude of AC voltages. Then, when determining that there is an instantaneous power outage or a sudden rise in the power supply voltages, the amplitude calculator 99a outputs a predetermined fault flag to the fault determination unit 99c.

The unbalance calculator 99b determines whether or not there is a power supply voltage unbalance or phase loss based on a three-phase voltage unbalance rate. Then, when determining that there is a power supply voltage unbalance or phase loss, the unbalance calculator 99b outputs a predetermined fault flag to the fault determination unit 99c.

The fault determination unit 99c outputs a predetermined power supply fault signal when the fault flag is inputted from at least one of the amplitude calculator 99a and the unbalance calculator 99b. In this case, the control unit 80 (see FIG. 1) stops the driving of the motor M1 by, for example, stopping the output of the PWM signal to the inverter circuit 40 (see FIG. 1).

Specifically, the control unit 80 stops the switching operation of the inverter circuit 40 when determining that there is an instantaneous power outage or a sudden rise in the power supply voltages, based on the change range and the change speed in the amplitude of the power supply voltages of the AC power supply E1. The control unit 80 also stops the switching operation of the inverter circuit 40 when determining that there is a phase voltage unbalance or phase loss based on the phase voltage unbalance rate of the AC power supply E1. This makes it possible to perform an appropriate protection operation in an event of a power supply fault. Instead, when a power supply fault signal is inputted, the control unit 80 may decelerate the motor M1 as a protection operation.

### <Effects>

According to the first embodiment, the control unit 80 controls the inverter circuit 40 based on the oscillation suppression compensation amount Kc1 and the distortion suppression compensation amount Kc2, thereby suppressing LC oscillations of the power supply currents. In addition, even when a small-capacity film capacitor is used as the smoothing capacitor 30, the power supply harmonic currents can be reduced, enabling operations in compliance with the power supply harmonic limits.

Moreover, according to the first embodiment, the compensation amount Kc is reflected in the switching operation of the inverter circuit 40 based on the feedforward control. Therefore, compared to the case where the feedback control is performed, the delay time associated with calculation processing can be shortened and the control can be stabilized. In addition, the power supply voltage detection unit 50 is capable of detecting an instantaneous change in the AC voltages. Therefore, an event of a power supply fault, the protection operation for the inverter circuit 40 can be performed more quickly than in the case where a fault is detected based on the detected value of the voltage of the DC reactor 20.

### <<Second Embodiment>>

A second embodiment is different from the first embodiment (see FIG. 2) in that the dc-axis command voltage Vdc* and the qc-axis command voltage Vqc* are adjusted instead of the three-phase command voltages (Vu*, Vv*, Vw*). The other matters are the same as in the first embodiment. Therefore, differences from the first embodiment will be explained, and the repetitive description will be omitted.

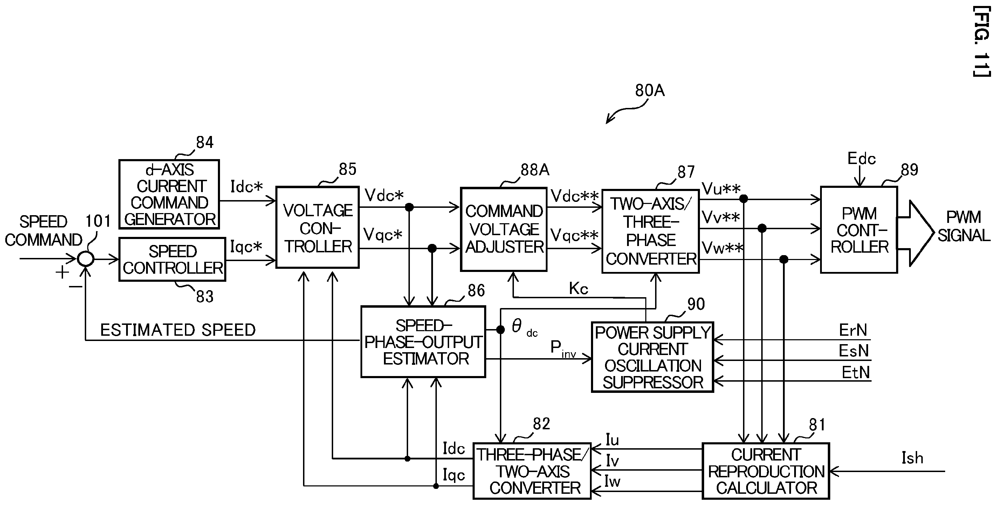

FIG. 11 is a functional block diagram of a control unit 80A of an electric power conversion device according to the second embodiment.

A command voltage adjuster 88A shown in FIG. 11 adjusts the dc-axis command voltage Vdc* and the qc-axis command voltage Vqc* based on the compensation amount Kc inputted from the power supply current oscillation suppressor 90. The command voltage adjuster 88A then outputs the adjusted dc-axis command voltage Vdc** and qc-axis command voltage Vqc** to the two-axis/three-phase converter 87.

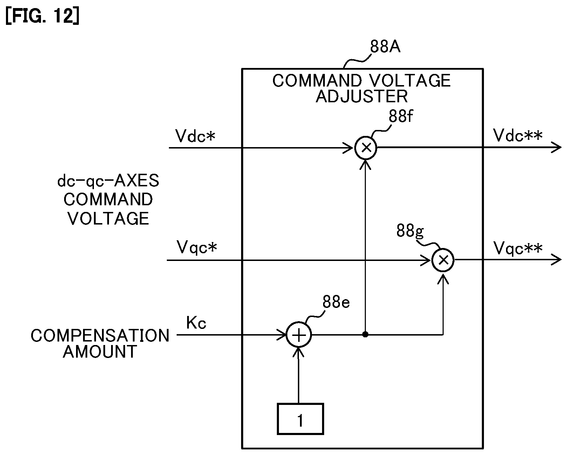

FIG. 12 is a functional block diagram of the command voltage adjuster 88A.

As shown in FIG. 12, the command voltage adjuster 88A includes an adder 88e and multipliers 88f and 88g. The adder 88e adds a value "1" to the compensation amount Kc calculated by the power supply current oscillation suppressor 90 (see

FIG. 11). The multiplier 88f multiplies the dc-axis command voltage Vdc* by the calculation result of the adder 88a, thereby calculating a new dc-axis command voltage Vdc**. In the same manner, the multiplier 88g calculates a qc-axis command voltage Vqc**.

The command voltage adjuster 88A then outputs the adjusted dc-axis command voltage Vdc** and qc-axis command voltage Vqc** to the two-axis/three-phase converter 87 (see FIG. 11). In this way, the control unit 80A (see FIG. 11) changes the compensation amount Kc for the dc-axis command voltage Vdc* (command voltage) and the qc-axis command voltage Vqc* (command voltage) for driving the inverter circuit 40 (see FIG. 1) based on the power supply voltages to such a predetermined amount as to reduce the power supply harmonic currents.

### <Effects>

According to the second embodiment, the dc-axis command voltage Vdc* and the qc-axis command voltage Vqc* are adjusted based on the compensation amount Kc inputted from the power supply current oscillation suppressor 90. Also with this configuration, the power supply harmonic currents can be reduced in the same way as in the first embodiment.

### <<Third Embodiment>>

A third embodiment is different from the first embodiment (see FIG. 2) in that the qc-axis command current Iqc* is adjusted instead of the three-phase command voltages (Vu*, Vv*, Vw*). The other matters are the same as in the first embodiment. Therefore, differences from the first embodiment will be explained, and the repetitive description will be omitted.

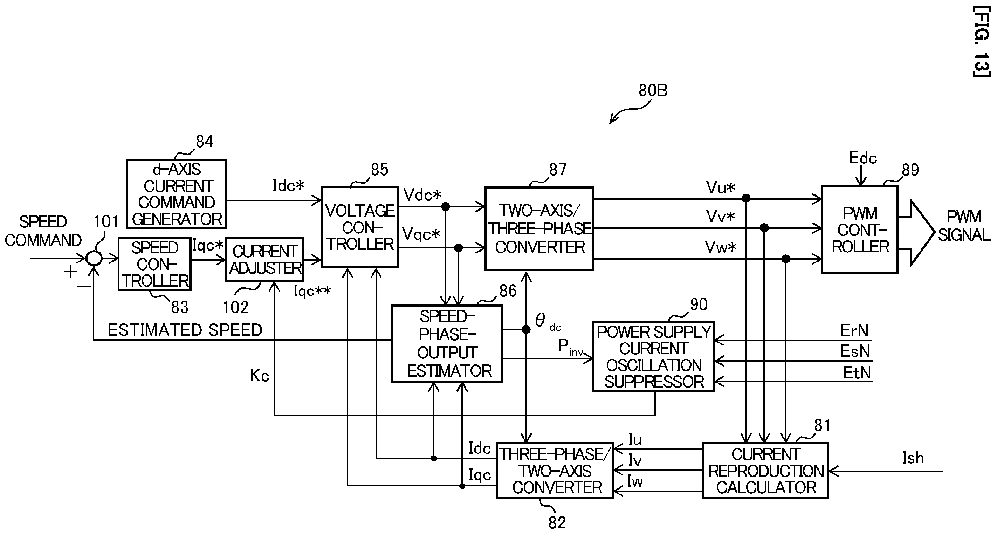

FIG. 13 is a functional block diagram of a control unit 80B of an electric power conversion device according to the third embodiment.

The control unit 80B shown in FIG. 13 includes a current adjuster 102 instead of the command voltage adjuster 88 (see FIG. 2) in the first embodiment. The current adjuster 102 adjusts the qc-axis command current Iqc* based on the compensation amount Kc inputted from the power supply current oscillation suppressor 90. The current adjuster 102 then outputs the adjusted qc-axis command current Iqc** to the voltage controller 85.

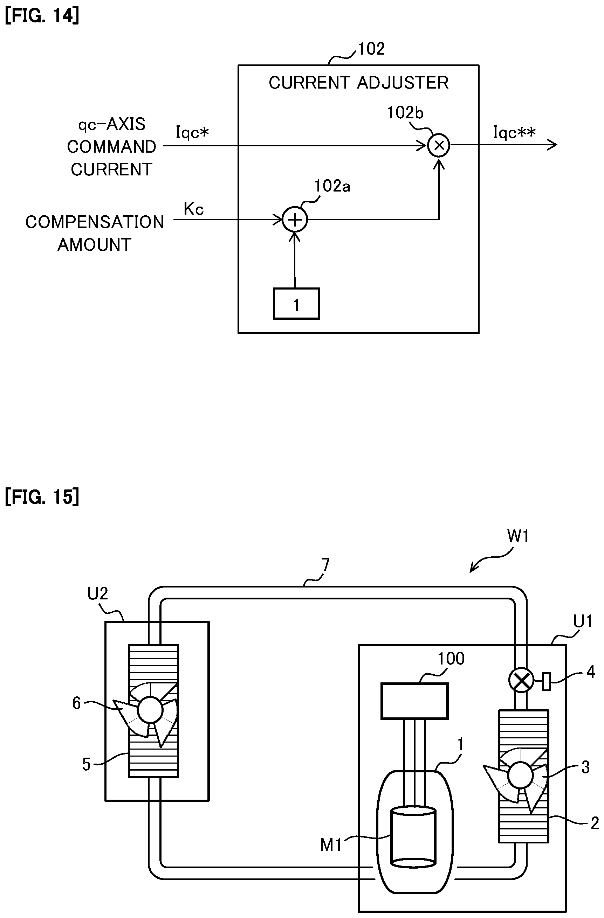

FIG. 14 is a functional block diagram of the current adjuster 102.

As shown in FIG. 14, the current adjuster 102 includes an adder 102a and a multiplier 102b. The adder 102a adds a value "1" to the compensation amount Kc calculated by the power supply current oscillation suppressor 90 (see FIG. 13). The multiplier 102b multiplies the qc-axis command current Iqc* by the calculation result of the adder 102a, thereby calculating a new qc-axis command current Iqc**. The current adjuster 102 then outputs the qc-axis command current Iqc** to the voltage controller 85 (see FIG. 13).

In this way, the control unit 80B (see FIG. 13) changes the compensation amount Kc for the qc-axis command current Iqc* (command current) for driving the inverter circuit 40 (see FIG. 1) based on the power supply voltages to such a predetermined amount as to reduce the power supply harmonic currents.

In addition, in the same way as in the first embodiment, the control unit 80B generates a predetermined oscillation suppression compensation amount Kc1 in each of commutation sections (sections) where the level relationship between the instantaneous values of the phase voltages of the respective phases of the AC power supply E1 (see FIG. 1) is changed and generates a distortion suppression compensation amount Kc2 that changes in the sawtooth wave pattern, based on the phase of the power supply voltages of the AC power supply E1. Then, the control unit 80B calculates the compensation amount Kc for the qc-axis command current Iqc* (command current) based on the sum of the oscillation suppression compensation amount Kc1 and the distortion suppression compensation amount Kc2.

Furthermore, the control unit 80B makes the compensation amount Kc for the command current smaller as the output Pᵢₙᵥ (output power) of the inverter circuit 40 becomes smaller. This makes it possible to appropriately adjust the compensation amount Kc moment by moment in response to changes in the output Pᵢₙᵥ of the inverter circuit 40.

### <Effects>

According to the third embodiment, the qc-axis command current Iqc* is adjusted based on the compensation amount Kc inputted from the power supply current oscillation suppressor 90. Also with this configuration, the power supply harmonic currents can be reduced in the same way as in the first embodiment.

### <<Fourth Embodiment>>

In a fourth embodiment, description will be given of an air conditioner W1 (see FIG. 15) equipped with the electric power conversion device 100 (see FIG. 1) having the configuration described in the first embodiment. The configuration and processing details of the electric power conversion device 100 are the same as in the first embodiment, so their description will be omitted.

FIG. 15 is a configuration diagram of the air conditioner W1 according to the fourth embodiment.

The air conditioner W1 is an apparatus that performs air conditioning such as a cooling operation. As shown in FIG. 15, the air conditioner W1 includes, as constituents provided in an outdoor unit U1, a compressor 1, an outdoor heat exchanger 2, an outdoor fan 3, and an expansion valve 4, as well as the electric power conversion device 100. In addition, the air conditioner W1 includes an indoor heat exchanger 5 and an indoor fan 6 as constituents provided in an indoor unit U2.

The compressor 1 is a device configured to compress a low-temperature, low-pressure gaseous refrigerant and discharge the resultant high-temperature, high-pressure gaseous refrigerant. As such a compressor 1, for example, a scroll compressor or a rotary compressor is used. Although not shown in FIG. 15, an accumulator for separating the refrigerant into gas and liquid is connected to a suction side of the compressor 1. A motor M1, which serves as a driving source for the compressor 1, is connected to the output side of the inverter circuit 40 (see FIG. 1) in the electric power conversion device 100.

The outdoor heat exchanger 2 is a heat exchanger configured to perform heat exchange between the refrigerant flowing through its heat transfer tube and outside air fed by the outdoor fan 3. The outdoor fan 3 is a fan configured to feed the outside air to the outdoor heat exchanger 2, and is installed near the outdoor heat exchanger 2.

The expansion valve 4 is a valve configured to reduce the pressure of the refrigerant condensed in a "condenser" (one of the outdoor heat exchanger 2 and the indoor heat exchanger 5). The refrigerant reduced in pressure by the expansion valve 4 is then led to an "evaporator" (the other one of the outdoor heat exchanger 2 and the indoor heat exchanger 5).

The indoor heat exchanger 5 is a heat exchanger configured to perform heat exchange between the refrigerant flowing through its heat transfer tube (not shown) and indoor air fed by the indoor fan 6 (air from an air-conditioned room).

The indoor fan 6 is a fan that feeds the indoor air to the indoor heat exchanger 5, and is installed near the indoor heat exchanger 5.

As shown in FIG. 15, the compressor 1, the outdoor heat exchanger 2, the expansion valve 4, and the indoor heat exchanger 5 are connected in this order via piping 7. For example, when the air conditioner 100 is set to perform a cooling operation, the refrigerant circulates through the compressor 1, the outdoor heat exchanger 2 (condenser), the expansion valve 4, and the indoor heat exchanger 5 (evaporator) in this order. Then, the air cooled by heat exchange with the refrigerant flowing through the indoor heat exchanger 5 is blown out from the indoor unit U2 into the air-conditioned room.

### <Effects>

According to the fourth embodiment, the air conditioner W1 is equipped with the electric power conversion device 100 (see FIG. 1) having the same configuration as in the first embodiment, which makes it possible to enhance the reliability of the air conditioner W1.

### <<Modifications>>

Although the electric power conversion devices 100, 100A, and 100B and the air conditioner W1 according to the present disclosure are described above in detail in the respective embodiments, the present disclosure should not be limited to the description of these and may be modified in various ways.

For example, the first embodiment describes the case where the power supply current oscillation suppressor 90 (see FIG. 3) generates the oscillation suppression compensation amount Kc1 and the distortion suppression compensation amount Kc2, but the present disclosure is not limited to this case. That is, the power supply current oscillation suppressor 90 may calculate the oscillation suppression compensation amount Kc1 according to the oscillation suppression compensation amount LUT 95, and then calculate the compensation amount Kc for the three-phase command voltages (command voltages) based on this oscillation suppression compensation amount Kc1.

Instead, the power supply current oscillation suppressor 90 may calculate the distortion suppression compensation amount Kc2 according to the distortion suppression compensation amount LUT 96, and then calculate the compensation amount Kc for the three-phase command voltages (command voltages) based on this distortion suppression compensation amount Kc2. In sum, at least one of the oscillation suppression compensation amount and the distortion suppression compensation amount may be generated.

The same applies to the second and third embodiments. Specifically, the power supply current oscillation suppressor 90 may adjust the dc-axis command voltage Vdc* (command voltage) and the qc-axis command voltage Vqc* (command voltage) based on at least one of the oscillation suppression compensation amount Kc1 and the distortion suppression compensation amount Kc2 (second embodiment). Alternatively, the power supply current oscillation suppressor 90 may adjust the qc-axis command current Iqc* (command current) based on at least one of the oscillation suppression compensation amount Kc1 and the distortion suppression compensation amount Kc2 (third embodiment).

The first embodiment describes the case where the compensation amount Kc is calculated by multiplying the value of the output Pᵢₙᵥ by the value of (Kc1 + Kc2), but the present disclosure is not limited to this case. For example, a monotonically increasing function (or lookup table) may be created in advance such that its value increases and asymptotically approaches a predetermined saturation value as the output Pᵢₙᵥ increases. In this case, the power supply current oscillation suppressor 90 calculates the compensation amount Kc by multiplying the value of the function corresponding to a given output Pᵢₙᵥ by the value of (Kc1 + Kc2). This prevents the compensation amount Kc from becoming too large in a region where the output Pᵢₙᵥ is large. The same applies to the second and third embodiments.

The above embodiments describe the case where the power supply voltage detection unit 50 (see FIG. 1) and the bus current detection unit 70 (see FIG. 1) are composed of predetermined resistive elements, but the present disclosure is not limited to this case. That is, current sensors may be used as the power supply voltage detection unit 50 and the bus current detection unit 70.

In addition, the above embodiments describe the case where the DC voltage detection unit 60 (see FIG. 1) is composed of multiple resistive elements, but the present disclosure is not limited to this case. That is, a voltage sensor may be used as the DC voltage detection unit 60.

Moreover, the fourth embodiment (see FIG. 15) describes the configuration in which the electric power conversion device 100 is connected to the motor M1 of the compressor 1, but the present disclosure is not limited to this configuration. For example, the electric power conversion device 100 may be connected to an outdoor fan motor (not shown). Alternatively, the electric power conversion devices 100 may be connected to both the motor M1 of the compressor 1 and the outdoor fan motor (not shown), respectively.

The fourth embodiment (see FIG. 15) describes the configuration in which the air conditioner W1 does not particularly include a four-way valve (not shown), but the present disclosure is not limited to this configuration. The air conditioner W1 may be provided with a four-way valve to switch between refrigerant flow paths for a cooling cycle and a heating cycle.

The fourth embodiment (see FIG. 15) describes the case where the air conditioner W1 includes the expansion valve 4, but the present disclosure is not limited to this case. For example, pressure reducing means such as a capillary tube may be provided instead of the expansion valve 4.

In addition, the fourth embodiment (see FIG. 15) may be applied to various types of air conditioners, including not only room air conditioners but also commercial air conditioners and multi-split air conditioners for buildings. Moreover, each of the embodiments may be applied to other instruments such as water heaters, refrigerators, freezers, and chillers.

The above embodiments may be combined as appropriate. For example, the motor M1 of the compressor 1 (see FIG. 15) in the fourth embodiment may be driven using the electric power conversion device including the control unit 80A in the second embodiment (see FIG. 11). Alternatively, the motor M1 of the compressor 1 (see FIG. 15) in the fourth embodiment may be driven using the electric power conversion device including the control unit 80B (see FIG. 13) in the third embodiment.

The embodiments are described in detail for the purpose of clearly explaining the present disclosure and the present disclosure is not necessarily limited to those having all the aforementioned constituents. Some of the constituents in each embodiment may be altered by deletion or addition/replacement with other constituents.

In addition, the mechanisms and configurations described above are those deemed necessary for the explanatory purposes and do not necessarily represent all of the mechanisms and configurations in actual products.

### Reference Signs List

- 1: compressor
- 2: outdoor heat exchanger
- 3: outdoor fan
- 4: expansion valve
- 5: indoor heat exchanger
- 6: indoor fan
- 10: rectifier circuit
- 20: DC reactor
- 30: smoothing capacitor
- 40: inverter circuit
- 50: power supply voltage detection unit
- 60: DC voltage detection unit
- 70: bus current detection unit
- 80, 80A, 80B: control unit
- 90: power supply current oscillation suppressor
- 100, 100A, 100B: electric power conversion device
- E1: AC power supply
- M1: motor
- W1: air conditioner

## Claims

1. An electric power conversion device comprising:
a rectifier circuit configured to convert an AC voltage applied from an AC power supply into a DC voltage;
a smoothing capacitor configured to smooth the DC voltage on an output side of the rectifier circuit;
an inverter circuit configured to convert the DC voltage of the smoothing capacitor into an AC voltage and cause a motor to be driven with the AC voltage;
a power supply voltage detection unit configured to detect a power supply voltage of the AC power supply; and
a control unit configured to control the inverter circuit, wherein
the control unit changes a compensation amount for a command voltage or a command current for driving the inverter circuit based on the power supply voltage to such a predetermined amount as to reduce power supply harmonic currents.

2. The electric power conversion device according to claim 1, wherein the control unit generates a predetermined oscillation suppression compensation amount in each section where a level relationship between instantaneous values of phase voltages of respective phases of the AC power supply is changed, and calculates the compensation amount based on the oscillation suppression compensation amount.

3. The electric power conversion device according to claim 1, wherein the control unit generates a distortion suppression compensation amount that changes in a sawtooth wave pattern, based on a phase of the power supply voltage of the AC power supply and calculates the compensation amount based on the distortion suppression compensation amount.

4. The electric power conversion device according to claim 1, wherein the control unit generates a predetermined oscillation suppression compensation amount in each section where a level relationship between instantaneous values of phase voltages of respective phases of the AC power supply is changed, generates a distortion suppression compensation amount that changes in a sawtooth wave pattern, based on a of the power supply voltage of the AC power supply, and calculates the compensation amount based on a sum of the oscillation suppression compensation amount and the distortion suppression compensation amount.

5. The electric power conversion device according to claim 1, wherein the control unit makes the compensation amount smaller as an output power of the inverter circuit becomes smaller.

6. The electric power conversion device according to claim 1, wherein when the control unit determines that there is an instantaneous power outage or a sudden rise in the power supply voltage based on a change range and a change speed in amplitude of the power supply voltage of the AC power supply, the control unit stops a switching operation of the inverter circuit.

7. The electric power conversion device according to claim 1, wherein when the control unit determines that there is a phase voltage unbalance or phase loss based on a phase voltage unbalance rate of the AC power supply, the control unit stops a switching operation of the inverter circuit.

8. An air conditioner comprising:
the electric power conversion device according to any one of claims 1 to 7;
a compressor;
an outdoor heat exchanger;
an expansion valve; and
an indoor heat exchanger, wherein
the motor to serve as a driving source for the compressor is connected to an output side of the inverter circuit.
